# EUROPÄISCHE PATENTSCHRIFT

(11) **EP 2 501 749 B1**
(45) Veröffentlichungstag und Bekanntmachung des Hinweises auf die Patenterteilung: **18.09.2013**
(21) Anmeldenummer: 10779788.8
(22) Anmeldetag: 16.11.2010
(51) Int. Cl.: C08J 9/32, C08J 9/42, C08J 9/228, C08K 7/22, C08J 9/00, C08J 9/35

(54) **MIKROHOHLKUGELN ENTHALTENDE HARZSCHAUMSTOFFE**
RESIN FOAMS CONTAINING MICROBALLOONS
MOUSSES DE RÉSINE CONTENANT DES MICROSPHÈRES CREUSES

(30) Priorität: 20.11.2009 EP 09176634
(43) Veröffentlichungstag der Anmeldung: 26.09.2012
(73) Patentinhaber: BASF SE, 67056 Ludwigshafen (DE)
(72) Erfinder: STEINKE, Tobias, Heinz, 67346 Speyer (DE); ALTEHELD, Armin, 55543 Bad Kreuznach (DE); ULANOVA, Tatiana, 67063 Ludwigshafen (DE); RANFT, Meik, 64625 Bensheim (DE); PERETOLCHIN, Maxim, 67466 Lambrecht (DE); BAUMGARTL, Horst, 67063 Ludwigshafen (DE); QUADBECK-SEEGER, Hans-Jürgen, 67098 Bad Dürkheim (DE); HAHN, Klaus, 67281 Kirchheim (DE)
(86) Internationale Anmeldenummer: PCT/EP2010/067556
(87) Internationale Veröffentlichungsnummer: WO 2011/061178

(56) Entgegenhaltungen:
- DE-A1- 10 027 770
- GB-A- 1 451 132
- US-A- 5 418 257
- US-A- 6 022 912
- US-A- 6 166 109

## Beschreibung

Die vorliegende Erfindung betrifft einen Mikrohohlkugeln mit flexibler Außenschicht enthaltenden offenzelligen Schaumstoff zur Schallabsorption, wobei die Mikrohohlkugeln einen D₅₀-Wert von mindestens 100 µm und höchsten 250 µm aufweisen, ein Verfahren zu dessen Herstellung und seine Verwendung zur Schallabsorption und/oder Wärmedämmung.

In der modernen Gesellschaft sind die Anforderungen an schallabsorbierende und schalldämpfende Materialien hoch. Schallabsorbierende und schalldämpfende Materialien werden verwendet, um den Raumklang zu verbessern, beispielsweise unerwünschte Halleffekte zu vermindern. Häufig werden hierfür Kunststoffe verwendet, die infolge ihrer hervorragenden Viskoelastizität, ihrer einfachen Verarbeitung und kommerziellen Verfügbarkeit geeignete Materialien sind. Die Kunststoffe werden dabei häufig in Form von porösen Schaumstoffen eingesetzt.

Poröse Materialien zeichnen sich dadurch aus, dass sie eine gute Schallabsorption bei hohen Frequenzen aufweisen, jedoch bei niederen Frequenzen ein niedriges Absorptionsvermögen besitzen. Eine Verbesserung der Schallabsorption von Kunststoffschäumen bei niederen Frequenzen kann beispielsweise durch Einsatz von dünnen Filmen und Schichten (Vibration) oder durch Resonatoren erzielt werden. Allerdings ist die Wirksamkeit dieser Maßnahmen infolge der eingeschränkten Frequenzbereiche sowie strukturelle Hemmnisse, zum Beispiel Breite und Gewicht, begrenzt.

Eine andere Möglichkeit, die schalldämpfenden und schallabsorbierenden Eigenschaften von Kunststoffen zu verbessern, besteht darin, unterschiedliche Füllstoffe in die Kunststoffe einzubringen.

US 5,378,733 beschreibt Polyurethanzusammensetzungen zur Abschwächung von Schall, die einen Zweikomponenten-Polyurethanbinder, einen teilchenförmigen Füllstoff mit einer Dichte oberhalb von 5 und hohle Polymer-Mikrokugeln mit einer Dichte unterhalb von 0,5 als zweiten Füllstoff enthalten. Die Mikrohohlkugeln werden durch Dispergieren in der Polyolkomponente vor Reaktion der Komponenten zu Polyurethan eingebracht.

WO 2004/022298 A1 betrifft ein schallisolierendes Material, das durch Extrudieren thermoplastischer Kautschukteilchen und PUR-Kunststoffteilchen unter Zugabe von expandierbaren Mikrohohlkörpern als Treibmittel hergestellt wird.

Aus WO 98/52997 A1 ist ein Schaumstoff aus einer Mischung von Epoxidharz und Thermoplast bekannt. Als Treibmittel können u.a. thermisch expandierbare Mikrohohlkugeln eingesetzt werden. Die in der WO 98/52997 beschriebenen Schaumstoffe können u.a. als Schalldämpfer in Automobilen verwendet werden.

Die US 5,272,001 bezieht sich auf offenzellige, flexible Polyurethanschäume, die zur Verbesserung der Elastizität und der stoßabsorbierenden Eigenschaften Mikrohohlkugeln mit einem mittleren Durchmesser von 35 bis 60 µm enthalten.

Trotz der bereits bekannten modifizierten Schaumstoffe besteht Bedarf an Schaumstoffen mit verbesserten schallabsorbierenden und schalldämpfenden Eigenschaften im Bereich von niederen Frequenzen.

Diese Aufgabe wird erfindungsgemäß gelöst durch einen Mikrohohlkugeln enthaltenden Schaumstoff zur Schallabsorption enthaltend

| | |
|---|---|
| 40 bis 85 Gew.-% | offenzelligen Polymerschaumstoff und |
| 15 bis 60 Gew.-% | Mikrohohlkugeln mit flexibler Außenschicht, wobei die Mikrohohlkugeln einen D₅₀-Wert von mindestens 100 µm und höchstens 250 µm aufweisen, |

bezogen auf das Gesamtgewicht von Polymerschaumstoff und Mikrohohlkugeln.

Der erfindungsgemäße Schaumstoff weist im Frequenzbereich von etwa 300 bis 1600 Hz höhere Schallabsorptionskoeffizienten auf als der gleiche Schaumstoff, der keine oder weniger Mikrohohlkugeln enthält. Überraschenderweise ist die Wirkung der im Schaumstoff enthaltenen Mikroholkugeln abhängig von ihrer Größe. Die Mikrohohlkugeln müssen eine Mindestgröße aufweisen, um einen positiven Effekt, d. h die gewünschte Verbesserung der Schallabsorptionseigenschaften zu bewirken. Mikroholkugeln mit einem D₅₀-Wert von etwa 35 bis 55 µm haben keine Einfluss auf die Schallabsorption des Schaumstoffs, enthalten die Schaumstoffe hingegen größere Mikrohohlkugeln mit einem D₅₀-Wert ≥ 100 µm, zeigen sie höhere Schallabsorptionskoeffizienten und höhere Strömungswiderstände, was ebenfalls mit einer verbesserten Schalldämpfung korreliert. Die mechanischen Eigenschaften der erfindungsgemäßen Schaumstoffe werden überraschenderweise, obwohl vergleichsweise große Mikroholkugeln eingesetzt werden müssen, durch die Gegenwart der Mikrohohlkugeln nicht oder nur sehr gering negativ beeinflusst.

Im Folgenden wird die Erfindung im Einzelnen erläutert.

Der erfindungsgemäße Schaumstoff enthält 40 bis 85 Gew.%, bevorzugt 50 bis 80 Gew.-% offenzelligen Polymerschaumstoff, bezogen auf das Gesamtgewicht von offenzelligem Polymerschaumstoff und Mikrohohlkugeln.

Als offenzellige Schäume werden solche bezeichnet, bei denen das Schaumgerüst im Wesentlichen aus einer Vielzahl miteinander verbundener, dreidimensional verzweigter Zellstege besteht. Je weniger durch Polymermembranen verschlossene Flächen der offenzellige Polymerschaumstoff enthält, desto elastischer ist er.

Bevorzugt werden erfindungsgemäß offenzellige Polymerschaumstoffe eingesetzt, die eine Vielzahl miteinander verbundener, dreidimensional verzweigte Stege enthalten, wobei das mittlere Verhältnis von Länge : Dicke der Stege größer 10 : 1, bevorzugt größer 12 : 1 und insbesondere größer als 15 : 1 ist und die Dichte der Stege größer 1,1 g/cm³ bevorzugt größer als 1,2 g/cm³ und insbesondere größer als 1,3 g/cm³ ist.

Das mittlere Verhältnis von Länge : Dicke wird mikroskopisch bestimmt, wobei die Steglänge und -dicke nach einem statistischen Auszählverfahren ermittelt werden. Als Steglänge ist der Abstand zwischen den Mittelpunkten zweier Knotenstellen und als Stegdicke die Dicke an der schmalsten Stelle des Stegs jeweils gemessen an der mikroskopischen Aufnahme, definiert. Zur Bestimmung der Dichte der Schaumstoffstege wird der Schaumstoff in eine geeignete Flüssigkeit, zum Beispiel Isopropanol, eingelegt, mit der er sich aufgrund seiner Offenzelligkeit vollsaugt. Die Dichte der Stege wird dann nach dem archimedischen Prinzip bestimmt.

Erfindungsgemäß bevorzugt ist der offenzellige Polymerschaumstoff elastisch.

Elastische Schaumstoffe weisen ein großes Rückstellvermögen nach Deformation auf. Insbesondere werden als elastische Schaumstoffe solche bezeichnet, die bei einer Druckverformung nach DIN 53580 bis zu 50 % ihrer Dicke keine bleibende Verformung von mehr als 2 % ihres Ausgangsvolumens aufweisen (Römpp Chemie-Lexikon, 9. Auflage 1995, Seite 4016).

Prinzipiell kann der Polymerschaumstoff aus allen, dem Fachmann zur Herstellung von offenzelligen Polymerschaumstoffen als geeignet bekannten Polymeren hergestellt werden. Bevorzugt wird der Polymerschaumstoff ausgewählt aus duroplastischen Schaumstoffen, besonders bevorzugt aus der Gruppe bestehend aus Phenol-Formaldehydharzschaumstoff, Harnstoff-Formaldehydharzschaumstoff und Melamin-Formaldehydharzschaumstoff und insbesondere bevorzugt ist Melamin-Formaldehydharzschaumstoff.

Die Herstellung geeigneter Melamin-Formaldehydharzschaumstoffe ist beispielsweise in der EP 0 017 671 B1 beschrieben, geeignete Harnstoff-Formaldehydharzschaumstoffe sind zum Beispiel aus der EP 0 031 513 B1 bekannt. Die Herstellung von Duroplast-Schaumstoffen wie Phenol-Formaldehydharzschaumstoffe, die erfindungsgemäß verwendet werden können, ist beispielsweise in der EP 0 049 768 B1 beschrieben.

Ganz besonders bevorzugt werden erfindungsgemäß Melamin-Formaldehydharzschaumstoffe, wie sie zum Beispiel in EP 0 017 672 B1 beschrieben sind und unter dem Handelsnamen Basotect^{®} kommerziell erhältlich sind, eingesetzt.

Die Rohdichte des offenzelligen Schaumstoffes liegt in der Regel im Bereich von 5 bis 100 g/l, bevorzugt im Bereich von 8 bis 20 g/l. Die Zugfestigkeit liegt bevorzugt im Bereich von 100 bis 150 kPa und die Bruchdehnung im Bereich von 8 bis 20 %.

Der erfindungsgemäße Schaumstoff enthält 15 bis 60 Gew.-%, bevorzugt 20 bis 50 Gew.-% Mikrohohlkugeln mit flexibler Außenschicht, wobei die Mikrohohlkugeln einen D₅₀-Wert von mindestens 70 µm und höchstens 250 µm aufweisen.

Die Mikrohohlkörper weisen eine flexible Außenschicht auf, das bedeutet, die Mikrohohlkugeln können leicht zusammengedrückt werden und sind so elastisch, dass sie mehreren Last- bzw. Druckwechseln ohne Platzen ihrer Hülle widerstehen. Bevorzugt werden Mikrohohlkugeln eingesetzt, deren Außenschicht aus einem oder mehreren Homopolymeren und/oder einem oder mehreren Copolymeren gebildet ist, deren Glasübergangstemperatur unterhalb der Verwendungstemperatur des Schaumstoffs liegt. Besonders bevorzugt wird die Außenschicht der Mikrohohlkugeln aus einem oder mehreren thermoplastischen Homopolymeren und/oder Copolymeren gebildet.

Ganz bevorzugt handelt es sich bei den in dem erfindungsgemäßen Schaumstoff enthaltenen Mikrohohlkugeln um expandierte Mikrohohlkugeln, die durch Expansion von expandierbaren Mikrohohlkugeln erhalten wurden. Derartige Mikroholkugeln bestehen im Wesentlichen aus einer gasdichten, polymeren Außenschicht und einem darin eingeschlossenen, flüssigen oder gasförmigen Treibmittel. Die Außenschicht der expandierbaren bzw. der expandierten Mikrohohlkugeln verhält sich üblicherweise wie ein Thermoplast, um ein Erweichen und die Expansion der expandierbaren Mikrohohlkugeln zu ermöglichen, wenn sich das Treibmittel durch Erwärmen ausdehnt. Die in der Außenschicht verwendeten Homopolymere und/oder Copolymere können linear, verzweigt oder vernetzt vorliegen. Für die Außenschicht werden häufig Polymere und Copolymere, die Acrylsäure, Methacrylsäure, Styrol, Vinylidenchlorid, Acrylonitril, Methacrylonitril und ähnliche sowie Mischungen davon enthalten, verwendet. Als Treibmittel werden üblicherweise niedrige Kohlenwasserstoffe wie Propan, n-Butan, Isobutan, Isopentan, n-Pentan, Neopentan, Hexan, Heptan und Petrolether und halogenierte Kohlenwasserstoffe wie Methylchlorid, Methylenchlorid, Trichlorfluormethan und Dichlordifluormethan verwendet. Die expandierbaren Mikrohohlkugeln können nach bekannten Verfahren hergestellt werden, wie sie beispielsweise in der US 3,615,972 beschrieben sind. Der mittlere Durchmesser der expandierbaren Mikrohohlkugeln nimmt beim Expandieren üblicherweise auf etwa das 4- bis 6-fache zu.

Geeignete Mikrohohlkugeln in expandierbarer und in expandierter Form sind auch kommerziell erhältlich, beispielsweise unter dem Handelsnamen "EXPANCEL^{®}" von der Akzo Nobel.

Erfindungsgemäß weisen die in dem Schaumstoff enthaltenen Mikrohohlkugeln einen D₅₀-Wert von mindestens 100 µm auf. Der D₅₀-Wert gibt den Teilchendurchmesser an, bei dem 50 % der Teilchen einen kleineren und 50 % der Teilchen einen größeren Durchmesser aufweisen. Der D₅₀-Wert kann beispielsweise mittels Lichtstreuung bestimmt werden. Ein Verfahren, wie die Bestimmung des D50-Wertes durchgeführt werden kann, ist beispielsweise im Technical Bulletins Nr. 3B der Akzo Nobel beschrieben.

Erfindungsgemäß bevorzugt weisen die in dem Schaumstoff enthaltenen Mikrohohlkugeln einen D₅₀-Wert von höchstens 250 µm auf. Die Mikrohohlkugeln sollen das Volumen der Schaumstoffporen ausfüllen, ohne jedoch die Poren und Kanäle des Schaumstoffs zu verstopfen.

Erfindungsgemäß bevorzugt befinden sich die Mikrohohlkugeln in den Poren des offenzelligen Polymerschaumstoffs.

Weiterhin betrifft die vorliegende Erfindung ein Verfahren zur Herstellung von Mikrohohlkugeln enthaltendem Schaumstoff, insbesondere zur Herstellung des vorstehend beschriebenen Mikrohohlkugeln enthaltenden Schaumstoffs, umfassend die Schritte:
I) Imprägnieren eines offenzelligen Polymerschaumstoffs mit einer flüssigen Dispersion enthaltend expandierbare Mikrohohlkugeln,
II) ggf. Pressen/Komprimieren und/oder Trocknen des Polymerschaumstoffs und
III) Wärmebehandeln des imprägnierten Polymerschaumstoffs bei einer Temperatur oberhalb der Expansionstemperatur und unterhalb der Zersetzungstemperatur der expandierbaren Mikrohohlkugeln zum Expandieren der Mikrohohlkugeln.

In Schritt I) wird ein offenzelliger Polymerschaumstoff mit einer flüssigen Dispersion enthaltend expandierbare Mikrohohlkugeln imprägniert. Die Imprägnierung kann durch Besprühen, Tauchen und Tränken mit der die expandierbaren Mikroholkugeln enthaltenden Dispersion erfolgen, beispielsweise nach der Incipient-Wetness-Methode, bei der das poröse Volumen des Polymerschaumstoffs durch in etwa gleiches Volumen an Imprägnierlösung aufgefüllt wird und der Träger getrocknet wird. Man kann auch mit einem Überschuss an Lösung arbeiten, wobei das Volumen dieser Lösung größer ist als das poröse Volumen des Polymerschaumstoffs. Dabei wird der Polymerschaumstoff mit der Imprägnierlösung gemischt und ausreichend lange gerührt.

Die zur Imprägnierung eingesetzte Mischung enthält 0,01 bis 50 Gew.-%, bevorzugt 1 bis 10 Gew.-% expandierbare Mikrohohlkugeln und 50 bis 99,99 Gew.-%, bevorzugt 90 bis 99 Gew.-% flüssiges Dispersionsmedium, bezogen auf das Gesamtgewicht der flüssigen Dispersion. Die Konzentration und Menge der zur Imprägnierung eingesetzten Mischung wird vom Fachmann an den zu imprägnierenden Polymerschaumstoff und die gewünschte Zusammensetzung des Mikrohohlkugeln enthaltenden Schaumstoffs angepasst. Beispielsweise werden bei Polymerschaumstoffen mit niedrigerer Dichte Imprägniermischungen mit niedriger Konzentration an Mikrohohlkugeln eingesetzt.

Die für die Imprägnierung eingesetzten expandierbaren Mikrohohlkugeln weisen vorzugsweise einen D₅₀-Wert > 16 µm, bevorzugt > 20 und besonders bevorzugt > 25 µm auf. Um eine homogene Einarbeitung der Mikrohohlkugel in den Porenraum ohne Verstopfen der Poren und Kanäle zu gewährleisten, werden bevorzugt Mikrohohlkugeln mit einem D₅₀-Wert ≤ 100 µm und besonders bevorzugt ≤ 50 µm, jeweils bezogen auf die Größe vor der Expansion, eingesetzt.

Als Dispersionsmedium werden bevorzugt Wasser und/oder C₁-C₄-Alkohole eingesetzt, dies gilt insbesondere für den Fall, dass der Polymerschaumstoff aus polaren Polymeren ausgewählt ist, und ganz besonders, wenn der Polymerschaumstoff ausgewählt ist aus Melamin-Formaldehydharzschaumstoff, Harnstoff-Formaldehydharzschaumstoff und Phenol-Formaldehydharzschaumstoff.

Die zur Imprägnierung eingesetzte Mischung kann weitere Bestandteile enthalten, beispielsweise
a) Fluorcarbonharze zur Hydrophobierung (siehe WO 2008/037600)
b) Hydrophobierende und brandhememnde Substanzen (siehe WO 2007/023118).

Gegebenenfalls wird der imprägnierte Polymerschaumstoff in Schritt II) gepresst bzw. komprimiert und getrocknet, dies erfolgt bevorzugt bei Temperaturen unterhalb der Expansionstemperatur der expandierbaren Mikrohohlkugeln.

Das Pressen kann beispielsweise wie in EP 0 451 535 A beschrieben durchgeführt werden, indem der Schaumstoff durch einen definierten Spalt zwischen zwei gegensinnig rotierenden, parallel ausgerichteten Walzen hindurchgeführt wird.

Neben dem Durchführen des Schaumstoffes durch einen Spalt zwischen zwei gleichsinnig rotierenden Walzen ist es auch möglich, den notwendigen Druck dadurch auszuüben, dass der imprägnierte Schaumstoff auf einem Förderband transportiert wird und eine Walze, die sich mit der gleichen Umfangsgeschwindigkeit dreht, mit der der Schaumstoff bewegt wird, auf den Schaumstoff presst. Weiterhin kann der Druck auf den Schaumstoff dadurch ausgeübt werden, dass der Schaumstoff zum Beispiel in eine Presse eingelegt wird, in welcher ein Stempel auf den Schaumstoff presst. In diesem Fall ist jedoch ein kontinuierliches Pressen nicht möglich.

In Schritt III) des erfindungsgemäßen Verfahrens wird der imprägnierte Polymerschaumstoff bei einer Temperatur oberhalb der Expansionstemperatur der expandierbaren Mikrohohlkugeln und unterhalb der Zersetzungstemperatur der Mikrohohlkugeln in der Wärme behandelt, so dass die Mikrohohlkugeln expandieren. Die genaue Temperatur der Wärmebehandlung hängt von den eingesetzten expandierbaren Mikrohohlkugeln ab, ebenso wie die Dauer der Wärmebehandlung.

Ein Vorteil an dem vorstehend beschriebenen Herstellungsverfahren für den erfindungsgemäßen Mikrohohlkugeln enthaltenden Schaumstoff ist, dass sichergestellt ist, dass die Struktur des zugrundeliegenden offenzelligen Polymerschaumstoffs erhalten bleibt. Die vor der Expansion vergleichsweise kleinen Mikrohohlkugeln werden beim Imprägnierungsschritt gleichmäßig in den Poren des Polymerschaumstoffs verteilt und expandieren innerhalb der Poren. Da erfindungsgemäß Mikrohohlkugeln mit flexibler Außenschicht eingesetzt werden, können die Mikrohohlkugeln nach der Expansion die jeweilige Pore auch vollständig ausfüllen, ohne das Polymerschaumstoffgerüst zu zerstören, da sie sich an die jeweilige Pore anpassen können.

Ebenfalls Gegenstand der vorliegenden Erfindung ist die Verwendung des vorstehend beschriebenen, Mikrohohlkugeln enthaltenden Schaumstoffs zur Schallabsorption, zur Schalldämpfung und zur Wärmedämmung, insbesondere im Kraftfahrzeug-, Eisenbahn-, Schiffs- und Flugzeugbau und in der Raumfahrt. Gegenstand der vorliegenden Erfindung sind auch Schallabsorptions- und Wärmedämmelemente, die den vorstehend beschriebenen Schaumstoff enthalten, beispielsweise Wand- und Deckenpaneele.

Im Folgenden wird die vorliegende Erfindung anhand von Beispielen dargestellt.

### Beispiele

### Beispiel 1 (erfindungsgemäß)

Ein Melamin-Formaldehydharzschaumstoff (Basotect^{®} G, Dichte 7,3 g/l, BASF SE) wurde mit wässrigen Dispersionen von expandierbaren Mikrohohlkugeln getränkt. Bei den Mikrohohlkugeln handelte es sich um EXPANCEL^{®} 091DU140, Akzo Nobel. Die Außenschicht der Kugeln ist aus einem Copolymeren aus Acrylat, Vinylidenchlorid und Acrylnitril aufgebaut. Die Mikrohohlkugeln enthalten eingeschlossen ein Treibmittel (Isobutan oder Isopentan). Der D₅₀-Wert der expandierbaren Teilchen betrug nach Herstellerangabe 35 bis 45 µm. Der imprägnierte Polymerschaum wurde im Trockenschrank bei 100 °C getrocknet und anschließend für 1 Stunde bei 130 °C gehalten, wobei die EXPANCEL^{®} -Mikrohohlkugeln auf eine Größe von ca. 100 bis 150 µm expandierten.

### Beispiel2 (Vergleich)

Es wurde wie in Beispiel 1 vorgegangen mit der Ausnahme, dass als expandierbare Mikrohohlkugeln EXPANCEL^{®} 820SL40 mit einem D₅₀-Wert von 10 bis 16 µm eingesetzt wurde, die nach dem Expandieren einen D₅₀-Wert von etwa 35 bis 55 µm aufwiesen.

### Beispiel 3 Messung der Schallabsorptionskoeffizienten

Die Schallabsorption wurde für die mit Mikrohohlkugeln imprägnierten Polymerschaumstoffe aus den Beispielen 1 und 2 gemäß ISO 10534-2 bestimmt. Die Ergebnisse sind für Beispiel 1 in Tabelle 1, für Beispiel 2 in Tabelle 2 wiedergegeben.

**Tabelle 1**

| Absorptionskoeffizienten der Polymerschaumstoffe aus Beispiel 1 (erfindungsgemäß) | | | | | |
|---|---|---|---|---|---|
| | Absorptionskoeffizient | | | | |
| Frequenz [Hz] | Konzentration Mikrohohlkugel [Gew.-%] | | | | |
| | 0 | 5 | 10 | 20 | 30 |
| 100 | 0,05 | 0,056 | 0,049 | 0,047 | 0,061 |
| 125 | 0,062 | 0,073 | 0,071 | 0,066 | 0,058 |
| 160 | 0,097 | 0,104 | 0,104 | 0,101 | 0,08 |
| 200 | 0,112 | 0,122 | 0,126 | 0,116 | 0,115 |
| 250 | 0,133 | 0,147 | 0,164 | 0,133 | 0,157 |
| 315 | 0,155 | 0,173 | 0,217 | 0,17 | 0,24 |
| 400 | 0,199 | 0,204 | 0,285 | 0,264 | 0,393 |
| 500 | 0,306 | 0,296 | 0,343 | 0,421 | 0,573 |
| 630 | 0,452 | 0,467 | 0,37 | 0,608 | 0,765 |
| 800 | 0,6 | 0,627 | 0,581 | 0,764 | 0,901 |
| 1000 | 0,732 | 0,761 | 0,768 | 0,882 | 0,966 |
| 1250 | 0,831 | 0,882 | 0,84 | 0,925 | 0,997 |
| 1600 | 0,909 | 0,961 | 0,948 | 0,981 | 0,965 |
| 2000 | 0,956 | 0,989 | 0,982 | 0,963 | 0,897 |
| 2500 | 0,962 | 0,974 | 0,961 | 0,899 | 0,832 |
| 3150 | 0,933 | 0,935 | 0,913 | 0,852 | 0,792 |
| 4000 | 0,911 | 0,926 | 0,904 | 0,831 | 0,813 |
| 5000 | 0,892 | 0,923 | 0,924 | 0,891 | 0,88 |

**Tabelle 2**

| Absorptionskoeffizienten für die mit Mikrohohlkugeln beladenen Polymerschaumstoffe aus Beispiel 2 (Vergleich) | | | | |
|---|---|---|---|---|
| | Absorptionskoeffizient | | | |
| Frequenz [Hz] | Konzentration Mikrohohlkugel [Gew.-%] | | | |
| | 0 | 5 | 7 | 25 |
| 100 | 0,104 | 0,099 | 0,097 | 0,089 |
| 125 | 0,104 | 0,098 | 0,103 | 0,099 |
| 160 | 0,132 | 0,119 | 0,125 | 0,122 |
| 200 | 0,158 | 0,137 | 0,134 | 0,136 |
| 250 | 0,19 | 0,165 | 0,154 | 0,16 |
| 315 | 0,222 | 0,206 | 0,175 | 0,203 |
| 400 | 0,28 | 0,279 | 0,217 | 0,276 |
| 500 | 0,41 | 0,359 | 0,317 | 0,357 |
| 630 | 0,6 | 0,435 | 0,46 | 0,438 |
| 800 | 0,766 | 0,467 | 0,596 | 0,479 |
| 1000 | 0,888 | 0,645 | 0,72 | 0,628 |
| 1250 | 0,966 | 0,81 | 0,843 | 0,755 |
| 1600 | 0,991 | 0,915 | 0,936 | 0,89 |
| 2000 | 0,974 | 0,968 | 0,98 | 0,958 |
| 2500 | 0,941 | 0,971 | 0,972 | 0,965 |
| 3150 | 0,927 | 0,943 | 0,944 | 0,943 |
| 4000 | 0,979 | 0,917 | 0,926 | 0,917 |
| 5000 | 0,945 | 0,898 | 0,908 | 0,896 |

Bei Beladungen > 10 % konnte mit EXPANCEL^{®} 091 DU140 eine deutliche Verbesserung der Absorption bei niederen bis mittleren Frequenzen (250-1500 Hz) erzielt werden, wohingegen mit EXPANCEL^{®} 820SL40 eine Verschlechterung in diesem Frequenzbereich im Vergleich zum unbehandelten Schaumstoff zu beobachten ist.

### Beispiel 4 Messung des Strömungswiderstands

Für die Mikrohohlkugeln enthaltenden Polymerschaumstoffe aus den Beispielen 1 und 2 wurde der Strömungswiderstand nach ISO 9053 bestimmt. Die Ergebnisse sind in den Tabellen 3 und 4 dargestellt.

**Tabelle 3 Strömungswiderstand der Schaumstoffe gemäß Beispiel 1 (erfindungsgemäß)**

| Konzentration Mikrohohlkugeln [Gew.-%] | Dichte [g/l] | Strömungswiderstand* [Pa*s/m²] |
|---|---|---|
| 0 | 7.3 | 11850 |
| 10 | 8.1 | 13225 |
| 20 | 8.5 | 17225 |
| 30 | 8.7 | 20425 |

Der Strömungswiderstand wurde bei 30%iger Beladung im Vergleich zum Standard nahezu verdoppelt.

**Tabelle 4 Strömungswiderstand der Schaumstoffe gemäß Beispiel 2 (Vergleich)**

| Konzentration Mikrohohlkugeln [Gew.-%] | Dichte [g/l] | Strömungswiderstand* [Pa*s/m²] |
|---|---|---|
| 0 | 7.3 | 11700 |
| 5 | 8.3 | 10725 |
| 7 | 8.2 | 11675 |
| 25 | 8.7 | 11925 |

Durch Tränken von Basotect mit den kleineren Mikrohohlkugeln Expancel SL40 konnte keine Verbesserung der Absorption und des Strömungswiderstands erzielt werden. Die Größe der Kugeln hat somit einen signifikanten Einfluss auf die akustischen Eigenschaften.

## Patentansprüche

1. Mikrohohlkugeln enthaltender Schaumstoff zur Schallabsorption enthaltend
40 bis 85 Gew.-% offenzelligen Polymerschaumstoff und
15 bis 60 Gew.-% Mikrohohlkugeln mit flexibler Außenschicht, wobei die Mikrohohlkugeln einen D₅₀-Wert von mindestens 100 Mikrometer und höchstens 250 Mikrometer aufweisen (bestimmt nach der messmethode der Beschreibung),
bezogen auf das Gesamtgewicht von Polymerschaumstoff und Mikrohohlkugeln.

2. Schaumstoff nach Anspruch 1, **dadurch gekennzeichnet, dass** der offenzellige Polymerschaumstoff eine Dichte von 5 bis 100 g/l aufweist.

3. Schaumstoff nach Anspruch 1 oder 2, **dadurch gekennzeichnet, dass** der Polymerschaumstoff ausgewählt ist aus der Gruppe bestehend aus PhenolFormaldehydharzschaumstoff, Harnstoff-Formaldehydharzschaumstoff und Melamin-Formaldehydharzschaumstoff, bevorzugt Melamin-Formaldehydharzschaumstoff.

4. Schaumstoff nach einem der Ansprüche 1 bis 3, **dadurch gekennzeichnet, dass** die Außenschicht der Mikrohohlkugeln aus einem oder mehreren Homopolymeren und/oder Copolymeren mit einer Gläsübergangstemperatur unterhalb der Verwendungstemperatur des Schaumstoffs gebildet ist.

5. Verfahren zur Herstellung eines Mikrohohlkugeln enthaltenden Schaumstoffs gemäß einem der Ansprüche 1 bis 4 umfassend die Schritte
I) Imprägnieren eines offenzelligen Polymerschaumstoffs mit einer flüssigen Dispersion enthaltend expandierbare Mikrohohlkugeln,
II) ggf. Pressen/Komprimieren und/oder Trocknen des Polymerschaumstoffs und
III) Wärmebehandeln des imprägnierten Polymerschaumstoffs bei einer Temperatur oberhalb der Expansionstemperatur und unterhalb der Zersetzungstemperatur der expandierbaren Mikrohohlkugeln zum Expandieren der Mikrohohlkugeln.

6. Verfahren nach Anspruch 65, **dadurch gekennzeichnet, dass** die für die Imprägnierung eingesetzten expandierbaren Mikrohohlkugeln einen D₅₀-Wert > 16 Mikrometer und ≤ 100 µm, bevorzugt ≤ 50 µm aufweisen (bestimmt nach der messmethode der Beschreibung).

7. Verfahren nach Anspruch 5 oder 6, **dadurch gekennzeichnet, dass** die in Schritt I) zur Imprägnierung eingesetzte Mischung 0,01 bis 50 Gew.-% expandierbare Mikrohohlkugeln und 50 bis 99,99 Gew.-% flüssiges Dispersionsmedium enthält, bezogen auf das Gesamtgewicht der flüssigen Dispersion.

8. Verfahren nach einem der Ansprüche 5 bis 7, **dadurch gekennzeichnet, dass** in Schritt I) als Dispersionsmedium Wasser und/oder C₁-C₄-Alkohole eingesetzt werden.

9. Verwendung von Mikrohohlkugeln enthaltendem Schaumstoff zur Schallabsorption und/oder Wärmedämmung nach einem der Ansprüche 1 bis 4.

10. Schallabsorptions- und/oder Wärmedämmelemente enthaltend Mikrohohlkugeln enthaltendem Schaumstoff nach einem der Ansprüche 1 bis 4.

## Claims

1. A foam comprising hollow microbeads and intended for sound absorption, comprising
from 40 to 85% by weight of open-cell polymer foam and
from 15 to 60% by weight of hollow microbeads with flexible external layer, where the D₅₀ value of the hollow microbeads is at least 100 micrometers and at most 250 micrometers (determined by the measurement method in the description),
based on the total weight of polymer foam and hollow microbeads.

2. The foam according to claim 1, wherein the density of the open-cell polymer foam is from 5 to 100 g/l.

3. The foam according to claim 1 or 2, wherein the polymer foam has been selected from the group consisting of phenol-formaldehyde-resin foam, ureaformaldehyde-resin foam, and melamine-formaldehyde-resin foam, preference being given to melamineformaldehyde-resin foam.

4. The foam according to any of claims 1 to 3, wherein the external layer of the hollow microbeads has been formed from one or more homopolymers and/or copolymers with glass transition temperature below the service temperature of the foam.

5. A process for producing a foam comprising hollow microbeads, according to any of claims 1 to 4, comprising the following steps:
I) impregnation of an open-cell polymer foam with a liquid dispersion comprising expandable hollow microbeads,
II) optionally, pressing/compression and/or drying of the polymer foam, and
III) heat-treatment of the impregnated polymer foam at a temperature above the expansion temperature and below the decomposition temperature of the expandable hollow microbeads, for the expansion of the hollow microbeads.

6. The process according to claim 5, wherein the D₅₀ value of the expandable hollow microbeads used for the impregnation process is > 16 micrometers and ≤ 100 µm, preferably 50 µm (determined by the measurement method in the description.

7. The process according to claim 5 or 6, wherein the mixture used in step I) for the impregnation process comprises from 0.01 to 50% by weight of expandable hollow microbeads and from 50 to 99.99% by weight of liquid dispersion medium, based on the total weight of the liquid dispersion.

8. The process according to any of claims 5 to 7, wherein step I) uses, as dispersion medium, water and/or C₁-C₄ alcohols.

9. The use of foam comprising hollow microbeads according to any of claims 1 to 4 for sound absorption and/or thermal insulation.

10. A sound-absorption and/or thermal-insulation element comprising foam comprising hollow microbeads, according to any of claims 1 to 4.

## Revendications

1. Mousse contenant des microbilles creuses pour l'absorption du son, contenant :
40 à 85 % en poids d'une mousse polymère à cellules ouvertes et
15 à 60 % en poids de microbilles creuses à couche extérieure flexible, les microbilles creuses présentant une valeur D₅₀ d'au moins 100 micromètres et d'au plus 250 micromètres, déterminée par la méthode de mesure de la description,
par rapport au poids total de la mousse polymère et des microbilles creuses.

2. Mousse selon la revendication 1, **caractérisée en ce que** la mousse polymère à cellules ouvertes présente une densité de 5 à 100 g/l.

3. Mousse selon la revendication 1 ou 2, **caractérisée en ce que** la mousse polymère est choisie dans le groupe constitué par une mousse de résine de phénolformaldéhyde, une mousse de résine d'urée-formaldéhyde et une mousse de résine de mélamine-formaldéhyde, de préférence une mousse de résine de mélamine-formaldéhyde.

4. Mousse selon l'une quelconque des revendications 1 à 3, **caractérisée en ce que** la couche extérieure des microbilles creuses est formée par un ou plusieurs homopolymères et/ou copolymères présentant une température de transition vitreuse inférieure à la température d'utilisation de la mousse.

5. Procédé de fabrication d'une mousse contenant des microbilles creuses selon l'une quelconque des revendications 1 à 4, comprenant les étapes :
I) l'imprégnation d'une mousse polymère à cellules ouvertes avec une dispersion liquide contenant des microbilles creuses expansibles,
II) éventuellement le pressage/la compression et/ou le séchage de la mousse polymère et
III) le traitement thermique de la mousse polymère imprégnée à une température supérieure à la température d'expansion et inférieure à la température de décomposition des microbilles creuses expansibles pour l'expansion des microbilles creuses.

6. Procédé selon la revendication 5, **caractérisé en ce que** les microbilles creuses expansibles utilisées pour l'imprégnation présentent une valeur D₅₀ > 16 micromètres et ≤ 100 µm, de préférence ≤ 50 µm, déterminée par la méthode de mesure de la description.

7. Procédé selon la revendication 5 ou 6, **caractérisé en ce que** le mélange utilisé à l'étape I) pour l'imprégnation contient 0,01 à 50 % en poids de microbilles creuses expansibles et 50 à 99,99 % en poids d'un milieu de dispersion liquide, par rapport au poids total de la dispersion liquide.

8. Procédé selon l'une quelconque des revendications 5 à 7, **caractérisé en ce que** de l'eau et/ou des alcools en C₁-C₄ sont utilisés à l'étape I) en tant que milieu de dispersion.

9. Utilisation d'une mousse contenant des microbilles creuses selon l'une quelconque des revendications 1 à 4 pour l'absorption du son et/ou l'isolation thermique.

10. Éléments d'absorption du son et/ou d'isolation thermique contenant une mousse contenant des microbilles creuses selon l'une quelconque des revendications 1 à 4.
